# EUROPÄISCHE PATENTSCHRIFT

(11) **EP 0 314 166 B1**
(45) Veröffentlichungstag und Bekanntmachung des Hinweises auf die Patenterteilung: **05.05.1993**
(21) Anmeldenummer: 88118004.6
(22) Anmeldetag: 28.10.1988
(51) Int. Cl.: C01B 13/32, C01G 23/053, C01G 25/02

(54) **Verfahren zur Herstellung von monodispersen keramischen Pulvern**
Process for the production of monodisperse ceramic powders
Procédé de préparation de poudres céramiques monodispensées

(30) Priorität: 29.10.1987 DE 3736686
(43) Veröffentlichungstag der Anmeldung: 03.05.1989
(73) Patentinhaber: FRAUNHOFER-GESELLSCHAFT ZUR FÖRDERUNG DER ANGEWANDTEN FORSCHUNG E.V., 80636 München (DE)
(72) Erfinder: Rinn, Günter, D-8705 Zellingen (DE); Nass, Rüdiger, D-8705 Zellingen (DE)
(74) Vertreter: Barz, Peter, Dr.

(56) Entgegenhaltungen:
- EP-A- 0 125 507
- EP-A- 0 177 198
- FR-A- 2 585 973
- FR-A- 2 593 166
- GB-A- 2 170 189
- AMERICAN CERAMIC SOCIETY BULLETIN, Band 66, Nr. 10, Oktober 1987, Seiten 1517-1520, ACerS, Westerville, Ohio, US; J.H. JEAN et al.: "Continuous production of narrow-sized and unagglomerated TIO2 powders"

## Beschreibung

Die vorliegende Erfindung betrifft ein Verfahren zur Herstellung monodisperser keramischer Pulver und insbesondere ein Verfahren zur Herstellung von teilchenförmigen Oxiden bzw. Hydroxiden bestimmter Elemente, die nach geeigneter Weiterverarbeitung monodisperse keramische Pulver liefern.

Ein Schwerpunkt der keramischen Forschung der letzten Jahre ist die chemische Synthese von feinen Pulvern. Bekannte Verfahren bedienen sich zu diesem Zweck z.B. der Pyrolyse von Metallalkoxiden, der hydrothermalen Behandlung von Metalloxid-Gelen und der Hydrolyse von Metallalkoxiden. Je nach Verfahren und angewendeten Reaktionsbedingungen lassen sich dadurch monodisperse Teilchen mit mittleren Durchmessern in unterschiedlichen Größenbereichen herstellen. Problematisch ist jedoch die reproduzierbare Herstellung von monodispersen Metalloxidpulvern unterschiedlicher Partikelgrößen. Im Falle der Hydrolyse von z.B. Metallalkoxiden ist es für das Wachstum monodisperser Partikel in einer Lösung wesentlich, daß eine homogene Keimbildung erfolgt und beim Wachstum der Keime keine großen Übersättigungen auftreten. Das bedeutet, daß einerseits dafür Sorge getragen werden muß, daß sich überhaupt Keime bilden, daß aber andererseits auch die spontane Präzipitation bei Wasserzugabe verhindert werden muß.

Eine weitere Bedingung für das Wachstum monodisperser Partikel ist die Verhinderung der Agglomeration von im Wachstum begriffenen Teilchen. Eine sterische Stabilisation kann dabei z.B. durch den Zusatz von oberflächenaktiven Polymeren, z.B. Hydroxypropylcellulose (HPC) erreicht werden, wie dies z.B. in Ceramic Bulletin, Band 65, Nr. 12, 1986, Seiten 1574 bis 1577 für den Fall der Herstellung von monodispersen Titanoxidpulvern beschrieben ist.

Die EP-A-125 507 beschreibt ein Verfahren zur Herstellung eines anorganischen Kompositmaterials, das Teilchen mit einer Größe von nicht mehr als 1 µm aufweist, bei dem eine Lösung, die wenigstens ein (gegebenenfalls oligomeres) Metallalkoxid und wenigstens ein Metallchelat oder ein Chelatisierungsmittel enthält, zersetzt wird.

Die GB-A-2 170 189 beschreibt ein Verfahren zur Herstellung eines anorganischen Materials in einer ausgewählten körperlichen Konfiguration durch Hydrolyse, in Anwesenheit eines Schutzkolloids, einer organischen Verbindung, die ein oder mehrere Elemente enthält, die für das herzustellende anorganische Material geeignet sind, wobei die organische Verbindung während der Hydrolyse in einer körperlichen Konfiguration vorliegt, die für die herzustellende körperliche Konfiguration geeignet ist.

Das American Ceramic Society Bulletin, Band 66, Nr. 10, Okt. 1987, S. 1517-1520, beschreibt die kontinuierliche Herstellung von nicht-agglomerierten TiO₂-Pulvern mit enger Teilchengrössenverteilung mit Hilfe bestimmter apparativer Maßnahmen.

Die EP-A-177 198 ist auf ein Verfahren zur Herstellung eines amorphen Metalloxid-Verbundmaterials gerichtet, bei dem hydrolysierbare organische Metallverbindungen in ein Sol überführt werden, das dann stehengelassen wird, bis es sich in ein geliertes Koagulum umwandelt.

Die FR-A-2 585 973 beschreibt die Herstellung monolithischer Gele durch Umsetzung (in alkoholischer Lösung) einer Carbonsäure mit einer organometallischen Verbindung.

Die FR-A-2 593 166 betrifft die Herstellung von Metalloxidpulvern für keramische Materialien durch Hydrolyse von Metallalkoxiden, bei der die mittlere Teilchengröße der Pulver im wesentlichen über die Natur der zwingend verwendeten Carbonsäure gesteuert wird.

Aufgabe der vorliegenden Erfindung ist es, ein Verfahren zur Verfügung zu stellen, mit dem es möglich ist, monodisperse Oxid- bzw. Hydroxidteilchen in reproduzierbarer Weise herzustellen und dabei die Teilchengröße im wesentlichen durch Variation eines Parameters zu steuern.

Überraschenderweise wurde gefunden, daß diese Aufgabe gelöst werden kann durch ein Verfahren zur Herstellung von monodispersen teilchenförmigen Oxiden bzw. Hydroxiden, bei dem hydrolysierbare Verbindungen von Al, V, Ti, Zr, Hf, Sn, U, B oder Si, vorzugsweise von Al, Ti oder Zr, in Anwesenheit einer Verbindung, die über mindestens zwei Atome aus der Gruppe O, N und S verfügt, als Komplexbildner, der sich an die Zentralatome der hydrolysierbaren Verbindungen koordiniert, eines Stabilisators, der in der Lage ist, eine Agglomerierung von wachsenden Keimen zu verhindern, und einer anorganischen oder organischen Säure in einem organischen Lösungsmittel mit Wasser umgesetzt werden.

Die Ausgangsverbindungen müssen gegenüber Wasser instabil, d.h. hydrolysierbar, sein und sich außerdem in größeren Konzentrationen im verwendeten Lösungsmittel lösen. Geeignete Verbindungen haben vorzugsweise die allgemeine Formel:

MRₙ (I)

in welcher M das Zentralatom darstellt, n gleich der Wertigkeit von M ist und die Gruppen R, die gleich oder verschieden sein können, sich durch Wasser abspalten lassen. Da die Gruppen R bei der Hydrolyse ohnehin entfernt werden, ist es vom wirtschaftlichen Standpunkt aus erwünscht, daß diese eine möglichst einfache Struktur aufweisen, z.B. Halogen-, Alkyl-, Alkoxy- oder Acyloxygruppen sind, obwohl erfindungsgemäß auch Gruppen mit komplexerer Struktur in Betracht kommen, wie z.B. Kohlenwasserstoffreste, verzweigt oder unverzweigt, die ein oder mehrere Mehrfachbindungen enthalten und/oder durch Substituenten wie z.B. Halogen, Alkoxy, Nitro und Dialkylamino substituiert sind. Diese Gruppen können z.B. als solche oder z.B. über ein Sauerstoffatom, ein Stickstoffatom, eine Carbonylgruppe oder eine Oxycarbonylgruppe an das Metallatom gebunden sein.

Besonders bevorzugte Reste R in der obigen Formel (I) sind Halogenatome (Fluor, Chlor, Brom und Jod, insbesondere Cl und Br);Alkylgruppen mit 1 bis 8, vorzugsweise 1 bis 4 Kohlenstoffatomen, z.B. Methyl, Ethyl, n-Propyl, i-Propyl, n-Butyl, i-Butyl und sec-Butyl; Alkoxygruppen mit 1 bis 8, vorzugsweise 1 bis 4 Kohlenstoffatomen, z.B. Methoxy, Ethoxy, i-Propoxy, n-Propoxy, n-Butoxy, i-Butoxy, sec-Butoxy, Pentoxy und 2-Ethylhexyloxy; und Acyloxyreste mit 2 bis 8, vorzugsweise 2 bis 4 Kohlenstoffatomen, z.B. Acetoxy. Unter diesen Resten sind die obigen Alkoxygruppen die am meisten bevorzugten.

Verbindungen von Titan und insbesondere Zirkonium sind für das erfindungsgemäße Verfahren besonders bevorzugt, insbesondere dann, wenn in der obigen Formel (I) die vier Reste R identisch sind und für Alkoxyreste mit 1 bis 4 Kohlenstoffatomen stehen.

Selbstverständlich ist es auch möglich, bereits teilhydrolysierte bzw. zum Teil vorkondensierte Ausgangsverbindungen einzusetzen, solange sich diese noch in nennenswertem Umfang im Lösungsmittel lösen. Ebenso können Gemische von Verbindungen, die sich von einem einzigen oder mehreren Elementen, z.B. Metallen, ableiten, verwendet werden. Für Dotierungszwecke kann es wünschenswert sein, die Hydrolyse der Ausgangsverbindung in Anwesenheit einer kleinen Menge einer gegebenenfalls hydrolysierbaren Verbindung eines anderen Elements, z.B. Ca, Mg, Ba, Y, Nb, Ta usw. durchzuführen. Ebenso ist es möglich, den Komplexbildner nicht als solchen, sondern als Komplex mit dem entsprechenden Element einzusetzen. So kann z.B. ein Teil oder die Gesamtmenge an hydrolysierbarer Ausgangsverbindung in Form einer Komplex-Verbindung eingesetzt werden.

In Abhängigkeit vom Element, das in das Oxid bzw. Hydroxid umgewandelt werden soll, kann es sich auch als vorteilhaft erweisen, anstatt oder zusätzlich zu den bereits oben erwähnten Verbindungen andere hydrolysierbare Verbindungen einzusetzen, z.B. Oxychloride und Nitrate. Ganz allgemein ist, wie bereits oben erwähnt, jedoch jede Verbindung des gewünschten Elements geeignet, die mit Wasser reagiert und sich im Lösungsmittel zufriedenstellend löst.

Konkrete Beispiele für besonders bevorzugte Verbindungen sind:
AlCl₃, Al(OC₂H₅)₃, Al(OC₃H₇)₃;
TiCl₄, Ti(OC₂H₅)₄, Ti(OC₃H₇)₄, Ti(O-i-C₃H₇)₄, Ti(OC₄H₉)₄, Ti(2-ethylhexoxy)₄, Ti(acetylacetonato)₂(O-i-C₃H₇)₂;
ZrCl₄, Zr(OC₂H₅)₄, Zr(OC₃H₇)₄, Zr(O-i-(C₃H₇)₄, Zr(OC₄H₉)₄, Zr(2-ethylhexoxy)₄;
VOCl₃, V(OC₂H₅)₃,VO(OC₂H₅)₃;
SnCl₄; B(OCH₃)₃, B(OC₂H₅)₃; SiCl₄, Si(OCH₃)₄, Si(OC₂H₅)₄, Si(OC₃H₇)₄.

Das Lösungsmittel für das erfindungsgemäße Verfahren muß die Komponenten lösen, darf aber zumindest nicht in der Weise mit ihnen reagieren, daß die Hydrolyse be- oder verhindert wird. Bevorzugt werden Lösungsmittel, die keinen allzu hohen Siedepunkt, z.B. einen solchen unter 100°C, aufweisen, da das Lösungsmittel später vom ausgefällten Oxid bzw. Hydroxid entfernt werden muß. Polare organische Lösungsmittel werden bevorzugt, obwohl auch unpolare Lösungsmittel eingesetzt werden können. Besonders bevorzugt werden Alkohole, insbesondere Methanol, Ethanol, n-Propanol, i-Propanol, Butanol und Gemische derselben. Weitere erfindungsgemäß verwendbare Lösungsmittel sind z.B. Methylenchlorid, Chloroform, Tetrachlorkohlenstoff, Ether, insbesondere Diethylether und Tetrahydrofuran, Ketone, z.B. Aceton und Butanon, Ester, z.B. Ethylacetat, Pentan, Hexan, Cyclohexan, Benzol sowie Gemische dieser Lösungsmittel.

Als Komplexbildner für das erfindungsgemäße Verfahren eignen sich prinzipiell alle Verbindungen, die in der Lage sind, mit der im Lösungsmittel vorhandenen hydrolysierbaren Verbindung einen Komplex zu bilden. Der Komplexbildner koordiniert sich z.B. über ein Atom mit freien Elektronenpaaren an das Zentralatom der hydrolysierbaren Verbindung. Demnach sind die geeigneten Komplexbildner Verbindungen, die über mindestens 2 Atome aus der Gruppe O, N und S verfügen. Erfindungsgemäße werden Komplexbildner, die sich über Sauerstoffatome an das Zentralatom koordinieren, besonders bevorzugt. Zu dieser Gruppe von Verbindungen gehören z.B. die β-Dicarbonylverbindungen. Besonders geeignete Komplexbildner sind demgemäß Verbindungen der allgemeinen Formel 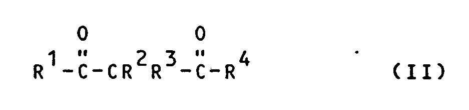
in welcher R¹ und R⁴ jeweils für Alkylgruppen mit 1 bis 4 Kohlenstoffatomen, insbesondere Methyl oder Ethyl, oder Alkoxygruppen mit 1 bis 4 Kohlenstoffatomen, insbesondere Methoxy und Ethoxy, stehen und R² und R³, die gleich oder verschieden sein können, Wasserstoff, Halogen und Alkyl mit 1 bis 4 Kohlenstoffatomen, insbesondere Wasserstoff, bedeuten.

Besonders bevorzugte Vertreter von Verbindungen mit der allgemeinen Formel (II) sind Acetylaceton und Acetessigsäureethylester.

Weitere Beispiele für gängige Komplexbildner, die im erfindungsgemäßen Verfahren mit Erfolg eingesetzt werden können, sind Ethylendiamin, S-Methylmercaptoessigsäure, N,N-Diethylcarbaminsäure, Oxalsäure, Salicylaldehyd, 2,2'-Bipyridyl, 1,10-Phenantrolin, Diethylentriamin, Triethylentetramin, Nitrilotriessigsäure, Ethylendiamintetraessigsäure, Brenzkatechin und verwandte Verbindungen.

Der Komplexbildner ist jedoch nicht auf die genannten Verbindungen beschränkt, sondern es können auch andere Verbindungen als Komplexbildner wirken, wie z.B. Dimethylformamid und Dimethylacetamid.

Gemäß der vorliegenden Erfindung wird das Verfahren in Anwesenheit eines Stabilisators durchgeführt. Als Stabilisator können alle Verbindungen verwendet werden, die in der Lage sind, eine Agglomerierung, d.h. das Zusammenkleben der wachsenden Keime in der Lösung, zu verhindern. Derartige Verbindungen üben eine Schutzkolloid-Wirkung aus, d.h., die von den Stabilisatoren umgebenen Teilchen sind infolge sterischer oder elektrostatischer Abstoßung nicht in der Lage, sich einander soweit anzunähern, daß eine Verschmelzung möglich wird. Der Stabilisator kann gegebenenfalls die Viskosität der Lösung auch soweit erhöhen, daß die Teilchen sich nur mit wesentlich verminderter Geschwindigkeit aufeinander zubewegen können und dadurch die Wahrscheinlichkeit von Zusammenstößen geringer wird. Für das erfindungsgemäße Verfahren sind demnach alle denkbaren anionischen, kationischen und neutralen Tenside und Schutzkolloide geeignet, solange sie sich im System lösen und nicht in unerwünschter Weise mit den anderen Komponenten des Systems wechselwirken bzw. reagieren. Beispiele für gängige Stabilisatoren sind Gelatine, Casein, Gummi arabicum, Lysalbinsäure, Stärke, Polyvinylalkohol, Polyvinylpyrrolidon und Poly(meth)acrylate. Weitere Beispiele finden sich z.B. in Ullmanns Enzyklopädie der technischen Chemie, 4. Auflage, Band 22, S. 455 bis 500. Erfindungsgemäß als Stabilisatoren besonders bevorzugt sind Cellulosederivate, insbesondere Celluloseester und Celluloseether. Konkrete Beispiele für derartige Verbindungen sind Benzylcellulose, Ethylcellulose, Methylcellulose, Hydroxyethylcellulose, Hydroxypropylcellulose und Carboxymethylcellulose. Das Molekulargewicht des Stabilisators kann im weiten Bereich schwanken und liegt im allgemeinen zwischen 10.000 und 2.000.000, insbesondere zwischen 20.000 und 1.000.000. Zu bedenken ist dabei, daß mit steigendem Molekulargewicht normalerweise die Löslichkeit abnimmt und die Viskosität der Lösung zunimmt. Es können auch zwei oder mehrere unterschiedliche Stabilisatoren oder der Art nach gleiche Stabilisatoren mit unterschiedlichen Molekulargewichten verwendet werden. Wichtig ist lediglich, daß der Stabilisator seinen Zweck, nämlich eine Verhinderung der Agglomeration, erfüllt. Als besonders bevorzugtes Beispiel eines Stabilisators kann Hydroxypropylcellulose, insbesondere Hydroxypropylcellulose mit einem Molekulargewicht zwischen 50.000 und 100.000, erwähnt werden.

Erfindungsgemäß wird, die Hydrolyse in Gegenwart einer Säure durchgeführt. Dies ist besonders wichtig, wenn im Laufe der Hydrolyse keine saure Verbindung erzeugt wird (die Hydrolyse der Halogenide führt z.B. zur Bildung von Halogenwasserstoffsäuren). Ohne Zusatz von Säure kann es geschehen, daß entweder bei der Hydrolyse die Hydrolyseprodukte in Lösung bleiben (z.B. in Anwesenheit großer Mengen an Komplexbildner) oder daß eine spontane, regellose Präzipitation erfolgt (nur geringe Mengen an Komplexbildner anwesend).

Als Säure können prinzipiell alle anorganischen und organischen Säuren dienen, die sich im Lösungsmittel lösen. Es sollte jedoch darauf geachtet werden, daß das Säureanion später leicht aus dem Niederschlag oder dem keramischen Pulver entfernt werden kann, z.B. durch thermische Zersetzung. Beispiele für geeignete Säuren sind Salpetersäure, Schwefelsäure und Halogenwasserstoffsäuren sowie Ameisensäure, Essigsäure und Propionsäure. Besonders bevorzugt wird Salpetersäure.

Die Konzentrationen der vorstehend genannten Verbindungen, die im erfindungsgemäßen Verfahren verwendet werden, sind naturgemäß von vielen Faktoren, so z.B. von dem Lösungsmittel, von der hydrolysierbaren Verbindung, der Konzentration der anderen anwesenden Komponenten etc. abhängig. Der Fachmann kann jedoch durch einige orientierende Versuche ohne weiteres die für den gewünschten Zweck optimalen Konzentrationen ermitteln. Weiter unten werden außerdem für eine konkrete Ausführungsform des erfindungsgemäßen Verfahrens auch zahlenmäßig definierte Konzentrationsverhältnisse angegeben.

Ganz allgemein kann festgestellt werden, daß die hydrolysierbare Verbindung in beliebig hoher Konzentration im Lösungsmittel vorhanden sein kann, solange sie sich darin löst. Eine Untergrenze der Konzentration ist dadurch gesetzt, daß die resultierenden Hydrolysate nicht im merklichen Ausmaß im Reaktionsgemisch löslich sein dürfen da sonst die Ausbeute verringert wird.

Die Konzentration des Komplexbildners ist diejenige Größe, die im erfindungsgemäßen Verfahren die Größe der resultierenden Hydrolysatteilchen wesentlich bestimmt. Demgemäß kann über die Menge an zugesetztem Komplexbildnern die Teilchengröße gesteuert werden, wobei mit zunehmender Komplexbildnerkonzentration die Teilchengröße zunimmt. Obwohl es eine allgemeingültige Obergrenze für die Menge an zugesetztem Komplexbildner nicht gibt, ist schon aufgrund wirtschaftlicher Überlegungen ein höheres Molverhältnis von Komplexbildner zu hydrolysierbarer Verbindung als 1:1 nicht angezeigt. Zu große Mengen an Komplexbildner können im übrigen dazu führen, daß keine Niederschlagsbildung mehr erfolgt. Wenn hingegen zuwenig Komplexbildner zugesetzt wird, kann es zu einer Gelbildung kommen.

Wie bereits oben erwähnt, spielt für das Ausfällungsverhalten der Hydrolysate im Lösungsmittel neben der Komplexbildnerkonzentration auch die An- oder Abwesenheit von Säure eine Rolle.

Die Stabilisatorkonzentration muß ausreichen, um die Suspension zu stabilisieren, d.h. um bei einem gegebenen Stabilisator ein Agglomerieren der wachsenden und der bereits fertigen Hydrolysatteilchen möglichst vollständig zu verhindern. Die Obergrenze der Stabilisatorkonzentration wird durch die Viskosität der resultierenden Lösung und damit insbesondere durch das Molekulargewicht des Stabilisators und die Art des verwendeten Lösungsmittels bestimmt. Der Stabilisator muß außerdem in den eingesetzten Mengen löslich sein.

Die günstigste Säurekonzentration hängt, wie oben erwähnt, von der Konzentration des Komplexbildners ab. Im Gegensatz zur Komplexbildnerkonzentration übt die Säurekonzentration aber keinen merklichen Einfluß auf die Teilchengröße aus. Die Säurekonzentration muß mindestens so hoch sein, daß keine spontane Präzipitation erfolgt, gleichzeitig aber immer noch eine Übersättigung der Lösung gewährleisten.

Die zur Hydrolyse verwendete Wassermenge sollte in der Regel ausreichen, um eine vollständige Hydrolyse zu bewirken, aber nicht so hoch sein, daß sich die Hydrolysate bereits wieder merklich lösen. Bevorzugt wird es, wenn die Summe aus Wasser, Säure und Komplexbildner noch nicht ausreicht, um alle am zentralen Metallatom vorhandenen Gruppe zu ersetzen. Das bedeutet, daß z.B. im Fall einer Verbindung MR₄ pro Mol dieser Verbindung weniger als 4 Mol, vorzugsweise ungefähr 3 Mol Wasser + Säure + Komplexbildner vorhanden sein sollten.

Für den konkreten Fall der Hydrolyse einer ethanolischen Lösung von Zirkoniumtetrapropylat in Gegenwart von Hydroxypropylcellulose als Stabilisator, Acetylaceton als Komplexbildner und Salpetersäure als Säure liegt das Zirkoniumpropylat vorzugsweise in Form von 0,1 bis 2, insbesondere 0,5 bis 1 molaren Lösungen vor. Bei zu hohen Konzentrationen kommt es bei der Hydrolyse zunehmend zur Bildung von Agglomeraten. Die Zugabe von etwa 15 g Hydroxypropylcellulose pro Mol Zirkonium ist dabei bereits ausreichend, um ein umgestörtes Partikelwachstum zu ermöglichen und die entstehende Suspension zu stabilisieren. Je nach Menge an zugesetztem Acetylaceton variiert der mittlere Durchmesser der Teilchen. Je höher die Acetylacetonkonzentration desto größer die Partikel. Eine Salpetersäurekonzentration zwischen 0,7 bis 1,0 Mol pro Mol Zirkoniumverbindung führt dabei zu den besten Ergebnissen. Mengen, die weit unterhalb dieses Bereichs liegen, führen je nach Versuchsbedingungen zu klaren Lösungen (bei hoher Acetylacetonkonzentration und geringen Wassermengen), Gelbildung (mittlere Komplexbildnerkonzentration, große Wassermenge) oder regelloser Niederschlagsbildung (niedrige Komplexbildnerkonzentration und große Wassermengen). Wassermengen im Bereich von 1,5 bis 2,5 Mol Wasser pro Mol Zirkoniumverbindungen sind für den Reaktionsverlauf besonders günstig; höhere Wassermengen ziehen eine zunehmende Korngröße und Agglomeration bzw. sogar eine abnehmende Ausbeute (bedingt durch Wiederauflösung der Teilchen) nach sich.

Das erfindungsgemäße Verfahren wird vorzugsweise so durchgeführt, daß man hydrolysierbare Verbindung, Komplexbildner und Stabilisator im Lösungsmittel löst und danach das Wasser und die Säure unter kräftigem Rühren zugibt. Die Wasserzugabe kann in einer oder in mehreren Portionen erfolgen, wobei jedoch die Zugabe in einer Portion vorteilhafter ist, da es dadurch zur gleichzeitigen Bildung aller Keime kommen kann, was sich auf die. Herstellung eines monodispersen Systems in der Regel günstig auswirkt.

Die Reaktionstemperatur ist für das erfindungsgemäße Verfahren ohne große Bedeutung. Sie wird nach unten grundsätzlich nur durch den Gefrierpunkt des Lösungsmittels bzw. durch die Viskosität der Lösung bei tiefen Temperaturen begrenzt, während nach oben der Siedepunkt des Lösungsmittels eine natürliche Grenze darstellt. In der Regel wird das erfindungsgemäße Verfahren bei Raumtemperatur oder leicht erhöhter Temperatur durchgeführt, wobei eine Temperaturerhöhung sich günstig auf die Reaktionsgeschwindigkeit auswirkt. So wurde z.B. gefunden, daß im oben erwähnten Fall der Hydrolyse von Zirkoniumtetrapropylat die Startzeit bis zum Beginn der Präzipitation bei Raumtemperatur ca. 2 Stunden, bei 40 bis 60°C dagegen nur wenige Minuten beträgt. Entsprechend werden bei Raumtemperatur auch mehrere Stunden benötigt, bis die Ausfällung vollständig ist, während bereits eine leichte Temperaturerhöhung eine vollständige Ausfällung in 15 bis 30 Minuten ermöglicht.

Der Niederschlag kann dann in an sich bekannter Weise, z.B. durch Zentrifugation oder Filtration,abgetrennt werden. Daran schließt sich in aller Regel eine Reinigung der Niederschlags durch Waschen in einem Lösungsmittel, das den Niederschlag nicht löst, an. Als derartige Lösungsmittel eignen sich besonders unpolare Lösungsmittel, wie z.B. niedrig siedende Benzinfraktionen, Petrolether, Hexan, usw. Danach wird die noch am Niederschlag haftende Flüssigkeit in bekannter Weise, z.B. durch Erhitzen, entfernt. Man kann dabei auch so vorgehen, daß man den Niederschlag zunächst wieder redispergiert und dann einer Sprühtrocknung unterwirft. Schließlich können durch Erhitzen auf höhere Temperaturen, z.B. >400°C, die in den monodispersen Metalloxidteilchen noch vorhandenen unerwünschten Rückstände, die z.B. vom Komplexbildner, Stabilisator oder der Säure herrühren können, zersetzt bzw. verflüchtigt werden.

Die erfindungsgemäß hergestellten monodispersen keramischen Pulver eignen sich insbesondere zur Herstellung von keramischen Bauteilen, denen sie ein besseres Sinterverhalten verleihen. Darüberhinaus führt eine bessere Pulververdichtung zu einer homogeneren Porenverteilung im Grünkörper. Nichtagglomerierte Metalloxidpulver mit definierter Porosität sind überdies auch als Trägermaterial für Katalysatoren geeignet.

Das folgende Beispiel dient zur Erläuterung der vorliegenden Erfindung.

### Beispiel

40 ml einer ethanolischen Zr(i-OPr)₄-Lösung mit einer Konzentration von einem Mol pro Liter wurden mit 20 ml einer 5 %-igen ethanolischen Lösung von Hydroxypropylcellulose und 10 ml Ethanol gemischt. Anschließend wurden in vier getrennten Ansätzen 1,2, 1,6, 2,0 oder 2,4 g Acetylaceton, entsprechend einer Konzentration von 0,30, 0,40, 0,50 und 0,60 Mol Acetylaceton pro Mol Zr, und eine Mischung aus 2,1 ml 65 %-iger HNO₃ und 0,6 ml Wasser zugegeben. Die Reaktionslösungen wurden zum Homogenisieren gerührt und dann im Wasserbad 1 Stunde auf 40°C temperiert. Die ausgefällten Pulver wurden entsprechend der Acetylacetonkonzentration als Zr 30, Zr 40, Zr 50 und Zr 60 bezeichnet.

Die Isolierung der Niederschläge erfolgte, indem man 50 ml Petrolether unter Rühren zu den Suspensionen tropfte. Die Teilchen wurden dann zentrifugiert und in einer Mischung von 25 ml Ethanol und 20 ml Petrolether redispergiert. Daraufhin wurden weitere 30 ml Petrolether im Ultraschallbad zugegeben. Die anschließende Sprühtrocknung der Suspensionen führte zu agglomeratfreien Pulvern. Diese Pulver wurden durch Thermoanalyse und elektronenmikroskopische Untersuchungen charakterisiert.

Beim Erhitzen auf Temperaturen zwischen 200 und 400°C trat ein Gewichtsverlust von ca. 40 % ein, der auf die Zersetzung der Nitrate und der flüchtigen organischen Verbindungen zurückzuführen ist. Der durch die thermische Zersetzung des Zirkonium-Acetylaceton-Komplexes gebildete Kohlenstoff wurde durch Erhitzen auf Temperaturen über 650°C in Luft entfernt.

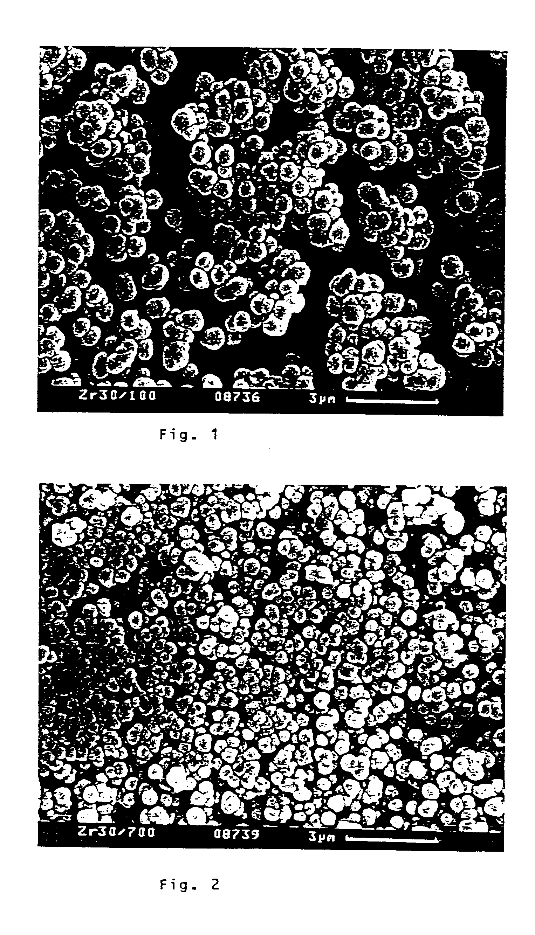

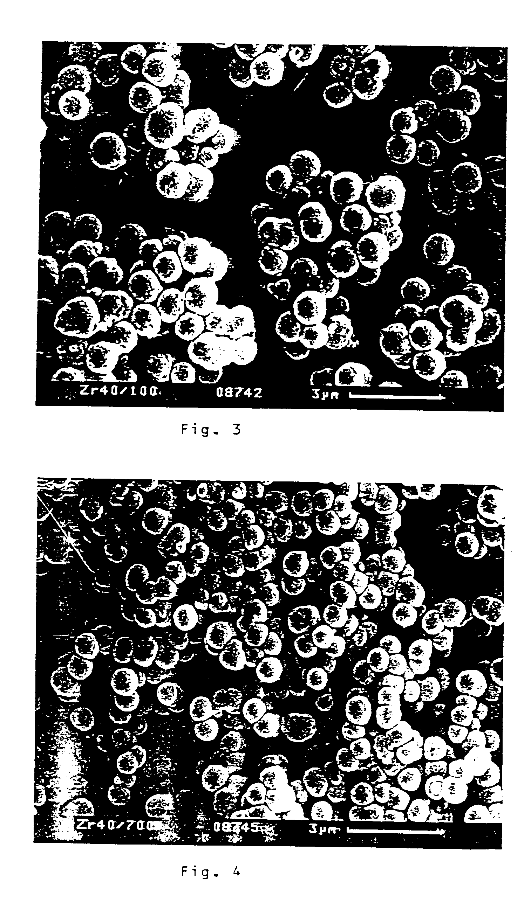

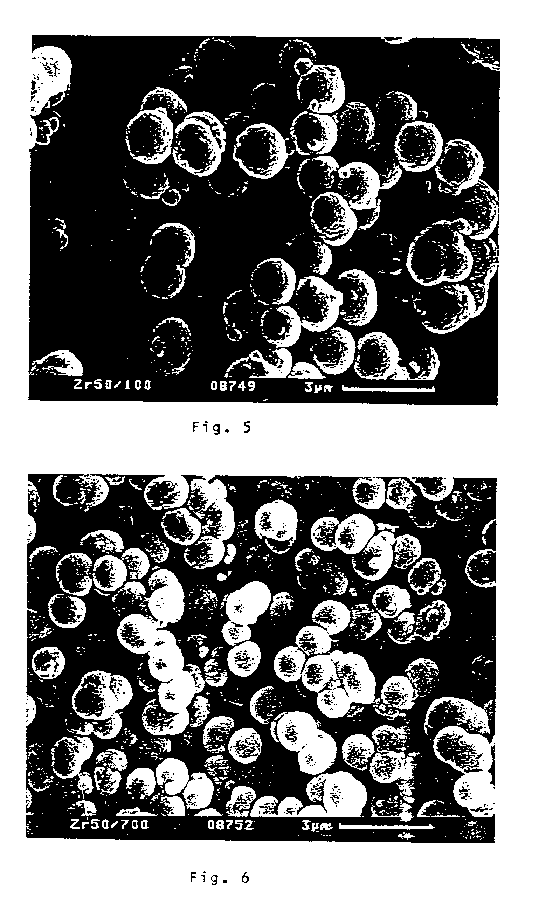

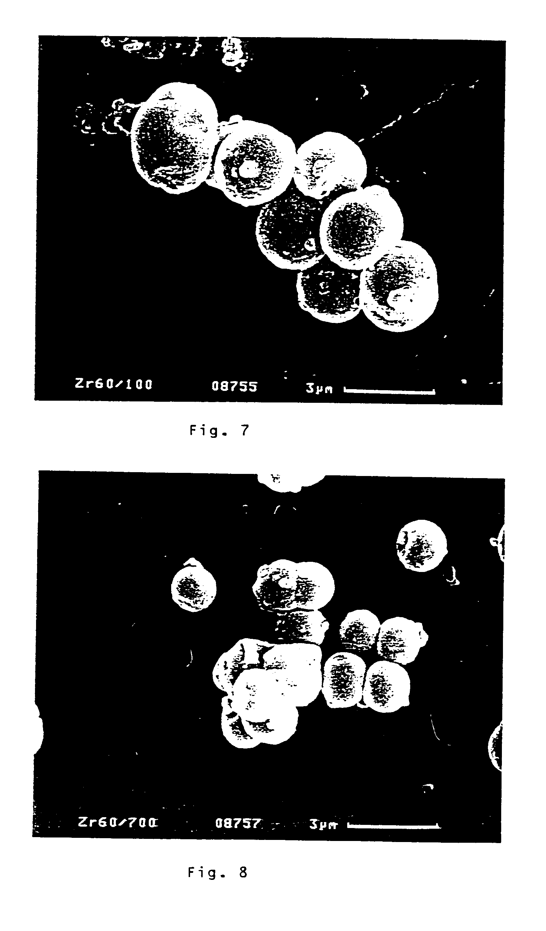

Die beiliegenden Figuren 1 bis 8 zeigen SEM-Mikroskopaufnahmen der bei 100°C getrockneten bzw. bei 700°C calcinierten Zirkoniumoxidpulver. Während die Figuren 1, 3, 5 und 7 die Teilchen Zr 30, Zr 40, Zr 50 und Zr 60 nach einer Trocknung bei 100°C zeigen, beziehen sich die Figuren 2, 4, 6 und 8 auf die entsprechenden Teilchen nach der Calcinierung bei 700°C. Wie aus diesen Figuren ersichtlich, nimmt mit zunehmender Acetylaceton-Konzentration der mittlere Durchmesser der Teilchen zu, so daß nach einer Trocknung bei 100°C Teilchen mit einem durchschnittlichen Durchmesser von 0,6, 1,0, 1,5 und 2,5 µm erhalten wurden. Die Calcinierung bei 700°C führte zu einer linearen Schrumpfung der Teilchen um bis zu 40 %, so daß die mittleren Durchmesser im Bereich zwischen 0,4 und 1,5 µm lagen.

## Patentansprüche

1. Verfahren zur Herstellung von monodispersen teilchenförmigen Oxiden bzw. Hydroxiden, bei dem hydrolysierbare Verbindungen von Al, V, Ti, Zr, Hf, Sn, U, B oder Si in Anwesenheit einer Verbindung, die über mindestens zwei Atome aus der Gruppe O, N und S verfügt, als Komplexbildner, der sich an die Zentralatome der hydrolysierbaren Verbindungen koordiniert, eines Stabilisators, der in der Lage ist, eine Agglomerierung von wachsenden Keimen zu verhindern, und einer anorganischen oder organischen Säure in einem organischen Lösungsmittel mit Wasser umgesetzt werden.

2. Verfahren nach Anspruch 1, dadurch gekennzeichnet, daß die Umsetzung in Anwesenheit eines Celluloseethers oder -esters als Stabilisator durchgeführt wird.

3. Verfahren nach Anspruch 2, dadurch gekennzeichnet, daß als Stabilisator Hydroxypropylcellulose verwendet wird.

4. Verfahren nach einem der Ansprüche 1 bis 3, dadurch gekennzeichnet, daß die Umsetzung in Anwesenheit von Salpetersäure durchgeführt wird.

5. Verfahren nach einem der Ansprüche 1 bis 4, dadurch gekennzeichnet, daß es sich bei der hydrolysierbaren Verbindung um eine Verbindung von Al, Ti oder Zr handelt.

6. Verfahren nach einem der Ansprüche 1 bis 5, dadurch gekennzeichnet, daß die hydrolysierbare Verbindung eine solche der allgemeinen Formel
MRₙ (I)
ist, worin M das Zentralatom darstellt, n gleich der Wertigkeit von M ist und die Gruppen R, die gleich oder verschieden sein können, Halogen, insbesondere Cl und Br, Alkyl mit 1 bis 8 Kohlenstoffatomen, Alkoxy mit 1 bis 8 Kohlenstoffatomen und Acyloxy mit 2 bis 8 Kohlenstoffatomen bedeuten.

7. Verfahren nach Anspruch 6, dadurch gekennzeichnet, daß in der Formel (I) M für Ti oder Zr steht, n gleich 4 ist und die Gruppen R identische Alkoxyreste mit 1 bis 4 Kohlenstoffatomen bedeuten.

8. Verfahren nach einem der Ansprüche 1 bis 7, dadurch gekennzeichnet, daß als organisches Lösungsmittel Methanol, Ethanol, n-Propanol, i-Propanol oder Gemische derselben eingesetzt werden.

9. Verfahren nach einem der Ansprüche 1 bis 8, dadurch gekennzeichnet, daß als Komplexbildner eine β-Dicarbonylverbindung, vorzugsweise eine solche der allgemeinen Formel 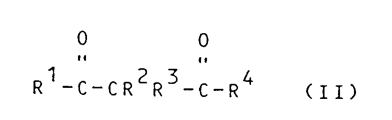 in welcher R¹ und R⁴, die gleich oder verschieden sein können, jeweils für C₁₋₄-Alkyl oder C₁₋₄-Alkoxy stehen und R² und R³, die gleich oder verschieden sein können, Wasserstoff, Halogen und C₁₋₄-Alkyl bedeuten, eingesetzt wird.

10. Verfahren nach einem der Ansprüche 1 bis 9, dadurch gekennzeichnet, daß als Komplexbildner Acetylaceton und/oder Acetessigsäureethylester verwendet wird.

11. Verfahren zur Herstellung von keramischen Pulvern, umfassend die folgenden Stufen:
a) Umsetzung einer hydrolysierbaren Verbindung von Al, V, Ti, Zr, Hf, Sn, U, B oder Si mit Wasser in einem organischen Lösungsmittel gemäß dem Verfahren von Anspruch 1;
b) Antrennung und gegebenenfalls Reinigung der resultierenden monodispersen teilchenförmigen Oxide bzw. Hydroxide; und
c) Calcinierung dieser Oxide bzw. Hydroxide.

## Claims

1. A process for the preparation of monodisperse particulate oxides or hydroxides, wherein hydrolyzable compounds of Al, V, Ti, Zr, Hf, Sn, U, B or Si are reacted with water in an organic solvent in the presence of a compound which has at least two atoms selected from the group of O, N and S, as complexing agent, which coordinates to the central atoms of the hydrolyzable compounds, a stabilizer which is capable of preventing an agglomeration of growing nuclei, and an inorganic or organic acid.

2. A process according to claim 1 wherein the reaction is carried out in the presence of a cellulose ether or ester as stabilizer.

3. A process according to claim 2 wherein hydroxypropylcellulose is used as stabilizer.

4. A process according to any of claims 1 to 3 wherein the reaction is carried out in the presence of nitric acid.

5. A process according to any of claims 1 to 4 wherein the hydrolyzable compound is a compound of Al, Ti or Zr.

6. A process according to any of claims 1 to 5 wherein the hydrolyzable compound is one of the general formula
MRₙ (I)
in which M represents the central atom, n is equal to the valency of M, and the groups R, which may be identical or different, denote halogen, particularly Cl and Br, alkyl having 1 to 8 carbon atoms, alkoxy having 1 to 8 carbon atoms and acyloxy having 2 to 8 carbon atoms.

7. A process according to claim 6 wherein in formula (I) M represents Ti or Zr, n is equal to 4, and the groups R denote identical alkoxy radicals having 1 to 4 carbon atoms.

8. A process according to any of claims 1 to 7 wherein methanol, ethanol, n-propanol, i-propanol or mixtures thereof are used as the organic solvent.

9. A process according to any of claims 1 to 8 wherein a β-dicarbonyl compound, preferably one of the general formula 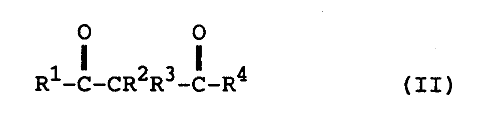 in which R¹ and R⁴, which may be identical or different, each represent C₁₋₄ alkyl or C₁₋₄ alkoxy, and R² and R³, which may be identical or different, denote hydrogen, halogen and C₁₋₄ alkyl, is used as the complexing agent.

10. A process according to any of claims 1 to 9 wherein acetylacetone and/or ethyl aceto-acetate is used as complexing agent.

11. A process for the preparation of ceramic powders comprising the following steps:
a) reaction of a hydrolyzable compound of Al, V, Ti, Zr, Hf, Sn, U, B or Si with water in an organic solvent according to the process of claim 1;
b) separation and, optionally, purification of the resultant monodisperse particulate oxide or hydroxide; and
c) calcination of said oxides or hydroxides.

## Revendications

1. Procédé de préparation des oxydes ou hydroxydes particulaires monodispersés, dans lequel des composés hydrolysables d'Al, V, Ti, Zr, Hf, Sn, U, B ou Si sont, en présence d'un composé comportant au moins deux atomes choisis parmi l'ensemble comportant O, N et S, sous forme d'un complexant qui se coordonne aux atomes centraux des composés hydrolysables, d'un stabilisant à même d'empêcher une agglomération de germes en croissance, et d'un acide organique ou minéral, mis à réagir avec de l'eau dans un solvant organique.

2. Procédé selon la revendication 1, dans lequel la réaction est mise en oeuvre en présence, en tant que stabilisant, d'un éther ou d'un ester de cellulose.

3. Procédé selon la revendication 2, caractérisé en ce qu'on utilise comme stabilisant l'hydroxypropylcellulose.

4. Procédé selon l'une des revendications 1 à 3, caractérisé en ce que la réaction est mise en oeuvre en présence d'acide nitrique.

5. Procédé selon l'une des revendications 1 à 4, caractérisé en ce que, pour ce qui est du composé hydrolysable, il s'agit d'un dérivé d'Al, de Ti ou de Zr.

6. Procédé selon l'une des revendications 1 à 5, caractérisé en ce que le composé hydrolysable est un composé de formule générale
MRₙ (1)
où M représente l'atome central, n est égal à la valence de M, et les groupes R, qui peuvent être identiques ou différents, représentent un halogène, en particulier Cl ou Br, un radical alkyle ayant de 1 à 8 atomes de carbone, alcoxy ayant de 1 à 8 atomes de carbone et acyloxy ayant de 2 à 8 atomes de carbone.

7. Procédé selon la revendication 6, caractérisé en ce que, dans la formule (1), M représente Ti ou Zr, n vaut 4, et les groupes R représentent des radicaux alcoxy identiques ayant de 1 à 4 atomes de carbone.

8. Procédé selon l'une des revendications 1 à 7, caractérisé en ce qu'on utilise comme solvant organique le méthanol, l'éthanol, le n-propanol, l'isopropanol ou leurs mélanges.

9. Procédé selon l'une des revendications 1 à 8, caractérisé en ce qu'on utilise comme complexant un composé β-dicarbonyle, de préférence un composé de ce type ayant la formule générale: 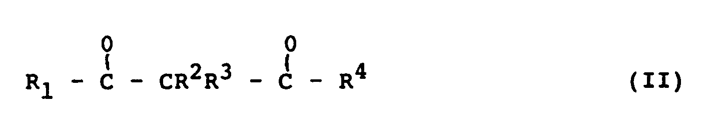 dans laquelle R¹ et R⁴, qui peuvent être identiques ou différents, représentent chacun un radical alkyle ou alcoxy en C₁₋₄, et R² et R³, qui peuvent être identiques ou différents, représentent un hydrogène, un halogène ou un radical alkyle en C₁₋₄.

10. Procédé selon l'une des revendications 1 à 9, caractérisé en ce qu'on utilise comme complexant de l'acétylacétone et/ou de l'acétoacétate d'éthyle.

11. Procédé pour préparer des poudres céramiques, qui comprend les étapes suivantes:
a) réaction avec l'eau dans un solvant organique selon le procédé de la revendication 1 d'un dérivé hydrolysable d'Al, V, Ti, Zr, Hf, Sn, U, B ou Si;
b) séparation et éventuellement purification des oxydes ou hydroxydes particulaires monodispersés obtenus; et
c) calcination de ces oxydes ou hydroxydes.
